# EUROPEAN PATENT SPECIFICATION

(11) **EP 2 273 828 B1**
(45) Date of publication and mention of the grant of the patent: **25.01.2012**
(21) Application number: 09290521.5
(22) Date of filing: 30.06.2009
(51) Int. Cl.: H04W 52/02, H04W 88/06, H04W 88/10

(54) **Power savings for wireless access points**
Energieeinsparungen für drahtlose Zugangspunkte
Économies d'énergie pour points d'accès sans fil

(43) Date of publication of application: 12.01.2011
(73) Proprietor: Alcatel Lucent, 75008 Paris (FR)
(72) Inventor: Balageas, Carine, 91190 Gif sur Yvette (FR); Haratcherev, Ivaylo, 91400 Orsay (FR)
(74) Representative: Anderlini, Alain

(56) References cited:
- WO-A1-03/065289
- WO-A1-2004/075583
- YUVRAJ AGARWAL, RAJESH K. GUPTA: "On Demand Paging Using Bluetooth Radios on 802.11 Based networks" CECS TECHNICAL REPORT 03-22, [Online] July 2003 (2003-07), pages 1-19, XP002555283 Retrieved from the Internet: URL:http://eprints.kfupm.edu.sa/54180/1/54 180.pdf> [retrieved on 2009-11-13]

## Description

### Technical Field of the Invention

The present invention relates to power savings within telecommunication networks, and more specifically to the reduction of power consumption of wireless access points.

### Technical Background of the Invention

within the past decade, global recognition of the need to protect the environment for future generations has emerged as a central issue that is now shaping behaviors in every industry. For internet and communication Technology (ICT) industry, the trend is to reduce the telecommunication networks footprint. Recent European directives require to include eco-designed off-mode or standby-mode in the household and office equipment. By the end of 2012, the equipment will have to automatically switch to off/stand-by mode after a short period of inactivity. Furthermore, the energy consumption limits of those low-power modes are set to be challenging.

The expected massive adoption of indoor Access Points requires specific solutions to meet requirements for eco-sustainability regarding consumed power and radio interferences.

Today, wifi access points are always consuming a relatively significant amount of energy as they have to periodically broadcast special beacons to signal their presence to the wireless stations, as mandated by 802.11 standard from the institute of Electrical and Electronics Engineers (IEEE). The beacons also provide information for synchronization and communication capabilities. It means that the radio module is turned on as longer as the access point is on. Furthermore, even in idle state (i.e., mostly in receive mode except for beacons), the access point consumes energy due to constant power supply of the radio front end. when there are no users under the coverage of an access point, at night for example, this can be seen as a waste of power, lack of security, and human exposition to useless electro-magnetic radiation.

Document WO2004/075583 A1 discloses a method and system for reduction of electrosmog in wireless local networks. One or more mobile network units communicating with a base station of a wireless local network. After a predetermined time interval without connecting signal, the base station changes over from the normal transmitting-receiving mode into a sleep mode, in which sleep mode no beacon signals and/or other radio frequency signals are transmitted from the base station. If a mobile network unit requires a network connection, it transmits an alert signal, and, upon receiving the alert signal of the mobile network unit, the base station transmits beacon signals to the mobile network unit and changes over into the normal transmitting-receiving mode.

Document "On Demand Paging Using Bluetooth Radios on 802.11 Based networks", CECS TECHNICAL REPORT, YUVRAJ AGARWAL, RAJESH K. GUPTA, relates to mulitmode STAs (BT/802.11) in peer mode. In order to reduce the power consumption of WLAN peer clients (ad-hoc), the requesting device sends a wake-up signal (Paging) via a BT interface to the peer entity in order to set up a WLAN connection.

### Summary of the invention

It is an object of the present invention to modulate the power consumption of a wireless access point in proportion to the effective usage of the wireless network.

In accordance with a first embodiment of the invention, a wireless access point comprises:
- a first radio transceiver for operating a first high-speed radio communication channel at a first power level based on a first radio access technology, which first radio communication channel conveying user traffic from or towards a wireless device,
- a second radio transceiver for operating a second lower-speed radio communication channel at a second lower power level based on a second different radio access technology, which second radio communication channel conveying control traffic from said wireless device,
- a controller for monitoring the receipt of wake-up messages from said wireless device through said second radio communication channel, and for switching off said first radio transceiver in the event of no wake up message being received within a pre-determined time interval.

By adding a second low-power channel to carry out-of-band control signals, the wireless station can maintain connectivity with the access point and can wake up the access point on-demand.

The wireless station periodically sends a wake-up signal (or reverse beacon) through the low-power channel so as to keep the wireless access point alive. If the access point does not receive any wake-up message for a pre-determined time period, then it switches off the main transceiver, thereby saving energy.

The first radio channel is used for conveying user traffic from the wireless station towards a data communication network such as the Internet, and vice-versa. The first radio channel is operated at a nominal power level, and provides high data throughput to the wireless stations. The first radio channel carries a beacon signal for synchronizing the wireless stations, and as such consumes energy and radiates electro-magnetic waves while being in idle state. For instance, the first radio channel and related transceivers conform to 802.11 standard.

The second radio channel is operated at a power that is substantially lower than said nominal power. Preferably, the second radio channel has approximatively the same range of coverage as the first radio channel, and thus operates at a reduced data rate. The second radio channel allows the initiation of radio communication from the wireless stations without any beacon signal being broadcast from the wireless access point, thereby requiring very-low power in idle-state. ultra-low power radio used for sensors networks, such as zygbee (802.15.4) or Tinynode, are particularly suited for the second radio channel and related transceivers.

In accordance with a further embodiment of the invention, said wake-up messages comprise a user credential whereby a particular user of said wireless device can be authenticated, and said controller is for further authenticating said particular user, and for switching off said first radio transceiver in the event of no wake up message with an appropriate user credential being received within said pre-determined time interval.

This embodiment enhances the security of the wireless connection by authenticating a user as being duly authorized to operate and keep the wireless connection awake, thereby preventing a malicious user to switch on a wireless access point that has been previously switched off.

In accordance with an alternative embodiment of the invention, said second radio communication channel is encrypted.

The second radio channel may use the same encryption scheme (WEP, WPA, etc) and/or encryption key as the first radio communication channel does.

The wireless access point may be implemented either as a wireless router or a wireless gateway to be used indoor in private or commercial premises.

The present invention also relates to a wireless device according to claim 6 and a method for reducing the power consumption of a wireless access point according to claim 7.

Embodiments of a method according to the invention correspond with the embodiments of a wireless access point according to the invention.

### Brief Description of the Drawings

The above and other objects and features of the invention will become more apparent and the invention itself will be best understood by referring to the following description of an embodiment taken in conjunction with the accompanying drawings wherein:

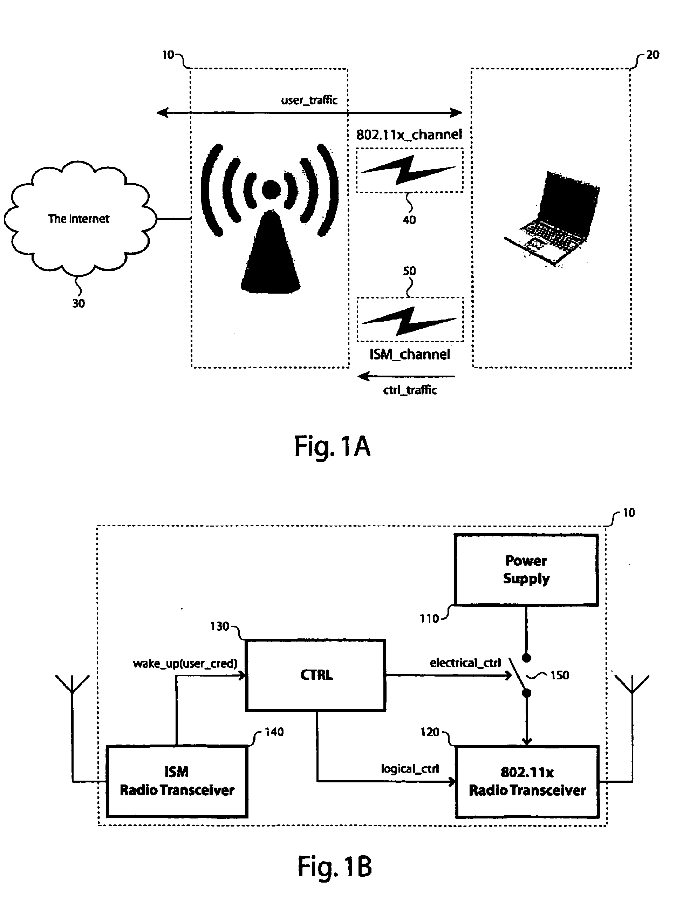

- fig. 1A represents a data communication system according to the invention,
- fig. 1B represents a wireless access point according to the invention.

### Detailed Description of the invention

There is seen in fig. 1A a data communication system 1 comprising the following elements:
- a wireless access point 10, such as a wifi gateway,
- a wireless station 20, such as a wifi laptop or terminal,
- the Internet 30.

The wireless access points 10 is coupled via a subscriber loop or a further wireless connection to an access node, such as a Digital subscriber Line Access Multiplexer (DSLAM) or a wimax base station, and further via an aggregation network to the Internet 30.

The wireless access point 10 and the wireless station 20 form part of a wireless Local Area Network (WLAN).

The wireless access point 10 and the wireless station 20 are coupled to each other by means of a first radio channel 40 (or 802.11x_channel) conveying user traffic (see user_traffic in fig. 1A), and by means of a second low-power radio channel 50 (or ISM_channel) conveying control traffic (see ctrl_traffic in fig. 1A).

The first radio channel 40 and related transceivers operates according to 802.11a, 802.11b, 802.11d, 802.11e, 802.11g and further IEEE standards, commonly known as wifi technology, and abbreviated as 802.11x. Those wireless technologies offer data rates up to several ten Mbit/s, and indoor coverage up to a few ten meters.

The second low-power radio channel 50 and related transceivers operate at a different frequency, and may use a different Medium Access control (MAC) protocol compared to the first radio channel 40.

In a preferred embodiment of the present invention, the second radio channel 50 and related transceivers operate in the Industrial, Scientific and Medical (ISM) frequency band. The TinyNode 184, which is a state of the art ultra-low-power module that provides a simple and reliable way to add wireless communication to sensors, actuators and controllers, has been chosen as transceiver for the second radio channel 50. It uses a semtech sx1211 radio transceiver that can operate in the 868-870Mhz license-free ISM frequency band. This device has a transmission range similar to the coverage range of the first radio channel 40.

The technical specifications of the Tinynode 184 are the following:
- Power consumption in Tx mode: 15/25 mA (0/10 dBm)
- Power consumption in Rx mode: 3 mA
- stand-by mode: 4 µA
- Power supply: 1.8 - 3.6 v
- RF sensitivity: -104 dBm @ 25 kbps, -100 dBm @ 66.7 kbps
- Frequency range: 868 - 870 MHz
- Transmission range: outdoor 150 m @ 25 kbps +10dBm, indoor 50 m @ 25 kbps +10dBm
- Microprocessor: Texas instruments MSP430F2417
- Interfaces: UART, LVTTL(3v) signal, SPI, IrDA supported, Molex 52465-3071
- Firmware: Tinyos

There is seen in fig. 1B further technical details about the wireless access point 10.

The wireless access point 10 comprises functional blocks, the most noticeable of which are:
- a power supply 110,
- a first radio transceiver 120 (or 802.11x radio transceiver),
- a second radio transceiver 140 (or ISM radio transceiver),
- a controller (or CTRL), and
- an electrical switch 150.

The power supply 110 is coupled to the first radio transceiver 120 through the switch 150 controlled by the controller 130. The controller 130 is further coupled to the first radio transceiver 120 and to the second radio transceiver 140.

The first radio transceiver 120 is for operating the first 802.11x radio channel 40, and for conveying user traffic therethrough at a high data rate.

The second radio transceiver 140 is for operating the second low-power ISM radio channel 50, and most noticeably for detecting the good receipt of wake-up messages. The receipt of a wake-up message is notified to the controller 130 (see wake_up_rcvd in fig1B). The second radio transceiver 140 is for further extracting a user credential from a wake-up message, and for supplying this information to the controller 130 (see user_cred in fig. 1B).

The controller 130 is for controlling the operation of the first transceiver 120 based on the wake-up receipt notifications from the second radio transceiver 140. The controller is for further authenticating the user credential embedded in the wake-up messages, and for restarting a timer T whenever a wake-up message with an appropriate user credential has been correctly received. The valid user credentials are stored in non-volatile memory (not shown), and can be configured through a web portal embedded in the wireless access point 10.

The controller 130 is for further switching off the first radio transceiver 120 whenever the timer T elapses, meaning that no wake-up message with an appropriate user credential has been received during the corresponding time-interval. This is achieved by first disabling the radio interface of the first transceiver 120 (see logical_ctrl in fig. 1B), and then opening the switch 150 (see electrical_ctrl in fig. 1B).

The controller 130 is for further switching on the first radio transceiver 120 by closing the switch 150 (see electrical_ctrl in fig. 1B) whenever a wake-up message with an appropriate user credential has been correctly received. Thereupon, the timer T is restarted.

The controller 130 is for further logically configuring the first radio transceiver 120 (see logical_ctrl in fig. 1B), such as passing radio communication parameters, after the first radio transceiver 120 is switched on.

An operation of this embodiment follows.

The low-power radio transceiver of the wireless station 20 sends periodic wake up messages through the second radio channel 50 to the low-power radio transceiver 140 of the wireless access point 10 to signal its presence. The receipt of a wake-up messages is notified to the controller 130, together with the corresponding user credential. The controller 130 authenticates the user credential, and wakes up (power on and logical configuration) the first radio transceiver 120 if the authentication steps passes.

Following this concept, the controller 130 turns the first radio transceiver 120 off, which consumes most of the energy supplied to the access point 10, when it does not hear anymore wake-up messages from the low-power radio module of the wireless station 20.

At the wireless station side, the sending of wake-up messages is triggered by either some network activity, and/or when the station is powered up, and/or when the station resumes from stand-by or hibernation mode.

The network activity can be monitored by inspecting the appropriate operating System (OS) call. For instance, under a Debian Linux environment, the virtual files which monitor the network status and track kernel events are exploited. More precisely, the IP-out-Request event which is tracked by the Nstat tool allows to detect the sending of an IP packet by an application (browser, VOIP client, etc). This can be used as an input to periodically send a wake-up message to the wireless access point 10 (the IP-out-Request event is not activated by the kernel per single packet but exploits a periodic timer; in this way, several IP packets are grouped in a single request).

The network activity monitoring can be restricted to a few eligible applications selected by the user.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. other hardware, conventional and/or custom, such as read only memory (ROM), random access memory (RAM), and non volatile storage, may also be included.

## Claims

1. A wireless access point (10) comprising:
- a first radio transceiver (120) for operating a first high-speed radio communication channel (40) at a first power level based on a first radio access technology, which first radio communication channel conveying user traffic (user_traffic) from or towards a wireless device (20), **characterised in that** the
wireless access point further comprises:
- a second radio transceiver (140) for operating a second lower-speed radio communication channel (50) at a second lower power level based on a second different radio access technology, which second radio communication channel conveying control traffic (ctrl_traffic) from said wireless device,
- a controller (130) for monitoring the receipt of wake-up messages (wake_up) from said wireless device through said second radio communication channel, and for switching off said first radio transceiver in the event of no wake up message being received within a pre-determined time interval.

2. A wireless access point (10) according to claim 1, wherein said wake-up messages comprise a user credential (usr_cred) whereby a particular user of said wireless device can be authenticated,
and wherein said controller is for further authenticating said particular user, and for switching off said first radio transceiver in the event of no wake up message with an appropriate user credential being received within said pre-determined time interval.

3. A wireless access point (10) according to claim 1, wherein second radio communication channel is encrypted.

4. A wireless access point (10) according to claim 1 or 2, wherein said wireless access point is a wireless indoor gateway.

5. A wireless access point (10) according to a claim 1 or 2, wherein said wireless access point is a wireless indoor router.

6. A wireless device (20) comprising:
- a first radio transceiver for operating a first high-speed radio communication channel (40) at a first power level based on a first radio access technology, which first radio communication channel conveying user traffic (user_traffic) from or towards said wireless device,
**characterised in that** the wireless device further comprises a second radio transceiver for operating a second lower-speed radio communication channel (50) at a second lower power level based on a second different radio access technology, which second radio communication channel conveying control traffic (ctrl_traffic) from said wireless device,
and said second radio transceiver is for further sending periodic wake up messages through said second radio communication channel to keep a further first radio transceiver (120) at a wireless access point (10) operating said first radio communication channel switched on.

7. A method for reducing the power consumption of a wireless access point (10), and comprising the step of:
- operating a first high-speed radio communication channel (40) at a first power level based on a first radio access technology, which first radio communication channel conveying user traffic (user_traffic) from or towards a wireless device (20),
**characterised in that** the method further comprises the steps of, by said access point:
- operating a second lower-speed radio communication channel (50) at a second lower power level based on a second different radio access technology, which second radio communication channel conveying control traffic (ctrl_traffic) from said wireless device,
- monitoring the receipt of wake-up messages (wake_up) from said wireless device through said second radio communication channel, and
- switching off a first radio transceiver (120) operating said first radio communication channel in the event of no wake up message being received within a pre-determined time interval.

## Patentansprüche

1. Drahtloser Zugangspunkt (10), umfassend:
- Einen ersten Funk-Transceiver (120) für den Betrieb eines ersten Hochgeschwindigkeits-Funkkommunikationskanals (40) mit einem ersten Leistungspegel auf der Basis einer ersten Funkzugangstechnologie, wobei der besagte erste Funkkommunikationskanal Benutzerverkehr (user_traffic), von einer oder an eine drahtlose(n) Vorrichtung (20) transportiert, **dadurch gekennzeichnet, dass** der drahtlose Zugangspunkt weiterhin umfasst:
- einen zweiten Funk-Transceiver (140) für den Betrieb eines zweiten Niedrigergeschwindigkeits-Funkkommunikationskanal (50) mit einem zweiten niedrigeren Leistungspegel auf der Basis einer zweiten unterschiedlichen Funkzugangstechnologie, wobei der besagte zweite Funkkommunikationskanal Steuerverkehr (ctrl_traffic) von der besagten drahtlosen Vorrichtung transportiert,
- eine Steuereinheit (130) zur Überwachung des Empfangs von Aufweck-Nachrichten (wake_up) von der besagten drahtlosen Vorrichtung über den besagten zweiten Funkkommunikationskanal, und zur Abschaltung des besagten ersten Funk-Transceivers, wenn innerhalb einer vorbestimmten Zeitspanne keine Aufweck-Nachricht empfangen wird.

2. Drahtloser Zugangspunkt (10) nach Anspruch 1, wobei die besagten Aufweck-Nachrichten einen Benutzerberechtigungsnachweis (usr_cred) enthalten, durch welchen ein bestimmter Benutzer der besagten drahtlosen Vorrichtung authentifiziert werden kann, und wobei die besagte Steuereinrichtung für die weitere Authentifikation des besagten bestimmten Benutzers und für die Abschaltung des besagten ersten Funk-Transceivers, wenn innerhalb der besagten vorbestimmten Zeitspanne keine Aufweck-Nachricht mit einem entsprechenden Benutzerberechtigungsnachweis empfangen wurde, vorgesehen ist.

3. Drahtloser Zugangspunkt (10) nach Anspruch 1, wobei der zweite Funkkommunikationskanal verschlüsselt ist.

4. Drahtloser Zugangspunkt (10) nach Anspruch 1 oder 2, wobei der besagte drahtlose Zugangspunkt ein gebäudeinternes drahtloses Gateway ist.

5. Drahtloser Zugangspunkt (10) nach Anspruch 1 oder 2, wobei der besagte drahtlose Zugangspunkt ein gebäudeinterner drahtloser Router ist.

6. Drahtlose Vorrichtung (20), umfassend:
- Einen ersten Funk-Transceiver für den Betrieb eines ersten Hochgeschwindigkeits-Funkkommunikationskanals (40) mit einem ersten Leistungspegel auf der Basis einer ersten Funkzugangstechnologie, wobei der besagte erste Funkkommunikationskanal Benutzerverkehr (user_traffic) von einer oder an eine drahtlose(n) Vorrichtung transportiert,
**dadurch gekennzeichnet, dass** die drahtlose Vorrichtung weiterhin einen zweiten Funk-Transceiver für den Betrieb eines zweiten Niedrigergeschwindigkeits-Funkkommunikationskanal (50) mit einem zweiten niedrigeren Leistungspegel auf der Basis einer zweiten unterschiedlichen Funkzugangstechnologie umfasst, wobei der besagte zweite Funkkommunikationskanal Steuerverkehr (ctrl_traffic) von der besagten drahtlosen Vorrichtung transportiert,
und dass der besagte zweite Funk-Transceiver für das weitere Senden von periodischen Aufweck-Nachrichten über den besagten zweiten Funkkommunikationskanal vorgesehen ist, so dass ein weiterer erster Funk-Transceiver (120) an einem drahtlosen Zugangspunkt (10), welcher den besagten ersten Funkkommunikationskanal betreibt, eingeschaltet bleibt.

7. Verfahren zur Reduzierung des Energieverbrauchs eines drahtlosen Zugangspunktes (10), den folgenden Schritt umfassend:
- Betreiben eines ersten Hochgeschwindigkeits-Funkkommunikationskanals (40) mit einem ersten Leistungspegel auf der Basis einer ersten Funkzugangstechnologie, wobei der besagte erste Funkkommunikationskanal Benutzerverkehr (user_traffic) von einer oder an eine drahtlose(n) Vorrichtung (20) transportiert,
**dadurch gekennzeichnet, dass** das Verfahren die folgenden von dem besagten Zugangspunkt durchgeführten Schritte umfasst:
- Betreiben eines zweiten Niedrigergeschwindigkeits-Funkkommunikationskanals (50) mit einem zweiten niedrigeren Leistungspegel auf der Basis einer zweiten unterschiedlichen Funkzugangstechnologie, wobei der besagte zweite Funkkommunikationskanal Steuerverkehr (ctrl_traffic) von der besagten drahtlosen Vorrichtung transportiert,
- Überwachen des Empfangs von Aufweck-Nachrichten (wake_up) von der besagten drahtlosen Vorrichtung über den besagten zweiten Funkkommunikationskanal, und
- Abschalten eines ersten Funk-Transceivers (120), welcher den besagten ersten Funkkommunikationskanal betreibt, wenn innerhalb einer vorbestimmten Zeitspanne keine Aufweck-Nachricht empfangen wird.

## Revendications

1. Point d'accès sans fil (10) comprenant :
- un premier émetteur/récepteur radio (120) pour exploiter un premier canal de radiocommunication à haut débit (40) à un premier niveau de puissance en se basant sur une première technologie d'accès radio, ledit premier canal de radiocommunication transportant du trafic d'utilisateur (user_traffic) depuis ou vers un dispositif sans fil (20), **caractérisé en ce que** le point d'accès sans fil comprend en outre :
- un deuxième émetteur/récepteur radio (140) pour exploiter un deuxième canal de radiocommunication à bas débit (50) à un deuxième niveau de puissance plus faible en se basant sur une deuxième technologie d'accès radio différente, ledit deuxième canal de radiocommunication transportant du trafic de commande (ctrl_traffic) depuis ledit dispositif sans fil,
- un contrôleur (130) pour surveiller la réception de messages de réveil (wake_up) depuis ledit dispositif sans fil à travers ledit deuxième canal de radiocommunication et pour déconnecter ledit premier émetteur/récepteur radio dans le cas où aucun message de réveil n'est reçu pendant un intervalle de temps prédéterminé.

2. Point d'accès sans fil (10) selon la revendication 1, avec lequel lesdits messages de réveil comprennent un justificatif d'utilisateur (usr_cred) par lequel peut être authentifié un utilisateur particulier dudit dispositif sans fil,
et avec lequel ledit contrôleur est en outre conçu pour authentifier ledit utilisateur particulier et pour déconnecter ledit premier émetteur/récepteur radio dans le cas où aucun message de réveil contenant un justificatif d'utilisateur approprié n'est reçu pendant ledit intervalle de temps prédéterminé.

3. Point d'accès sans fil (10) selon la revendication 1, avec lequel le deuxième canal de radiocommunication est crypté.

4. Point d'accès sans fil (10) selon la revendication 1 ou 2, avec lequel ledit point d'accès sans fil est une passerelle d'intérieur sans fil.

5. Point d'accès sans fil (10) selon la revendication 1 ou 2, avec lequel ledit point d'accès sans fil est un routeur d'intérieur sans fil.

6. Dispositif sans fil (20) comprenant :
- un premier émetteur/récepteur radio pour exploiter un premier canal de radiocommunication à haut débit (40) à un premier niveau de puissance en se basant sur une première technologie d'accès radio, ledit premier canal de radiocommunication transportant du trafic d'utilisateur (user_traffic) depuis ou vers ledit dispositif sans fil,
**caractérisé en ce que** le dispositif sans fil comprend en outre un deuxième émetteur/récepteur radio pour exploiter un deuxième canal de radiocommunication à bas débit (50) à un deuxième niveau de puissance plus faible en se basant sur une deuxième technologie d'accès radio différente, ledit deuxième canal de radiocommunication transportant du trafic de commande (ctrl_traffic) depuis ledit dispositif sans fil,
et ledit deuxième émetteur/récepteur radio étant en outre conçu pour envoyer des messages de réveil périodiques à travers ledit deuxième canal de radiocommunication pour qu'un premier émetteur/récepteur radio supplémentaire (120) à un point d'accès sans fil (10) maintienne l'exploitation et la connexion dudit premier canal de radiocommunication.

7. Procédé de réduction de la consommation d'énergie d'un point d'accès sans fil (10) et comprenant l'étape suivante :
- Exploitation d'un premier canal de radiocommunication à haut débit (40) à un premier niveau de puissance en se basant sur une première technologie d'accès radio, ledit premier canal de radiocommunication transportant du trafic d'utilisateur (user_traffic) depuis ou vers un dispositif sans fil (20),
**caractérisé en ce que** le procédé comprend en outre les étapes suivantes, par ledit point d'accès :
- Exploitation d'un deuxième canal de radiocommunication à bas débit (50) à un deuxième niveau de puissance plus faible en se basant sur une deuxième technologie d'accès radio différente, ledit deuxième canal de radiocommunication transportant du trafic de commande (ctrl_traffic) depuis ledit dispositif sans fil,
- Surveillance de la réception de messages de réveil (wake_up) de la part dudit dispositif sans fil à travers ledit deuxième canal de radiocommunication, et
- Déconnexion d'un premier émetteur/récepteur radio (120) exploitant ledit premier canal de radiocommunication dans le cas où aucun message de réveil n'est reçu pendant un intervalle de temps prédéterminé.
